# EUROPEAN PATENT SPECIFICATION

(11) **EP 3 311 976 B1**
(45) Date of publication and mention of the grant of the patent: **20.02.2019**
(21) Application number: 16194783.3
(22) Date of filing: 20.10.2016
(51) Int. Cl.: B29C 47/92, B29C 59/04, B29C 47/88, B29C 47/10, B29C 47/34, E01F 9/506

(54) **METHOD FOR APPLYING THERMOPLASTIC MARKINGS TO ROAD SURFACES**
VERFAHREN ZUM AUFBRINGEN VON THERMOPLASTISCHEN MARKIERUNGEN AUF STRASSENOBERFLÄCHEN
PROCÉDÉ D'APPLICATION DE MARQUAGES THERMOPLASTIQUES SUR DES REVETEMENTS DE ROUTES

(43) Date of publication of application: 25.04.2018
(73) Proprietor: Geveko Markings Denmark A/S, 5900 Rudkobing (DK)
(72) Inventor: FAGE-PEDERSEN, Anders Michael, 5700 Svendborg (DK); LEHMANN CARLSEN, Morten, 5270 Odense N. (DK)
(74) Representative: AWA Sweden AB

(56) References cited:
- WO-A1-95/19885
- WO-A1-99/04096
- WO-A1-2016/030284
- JP-A- H1 088 531
- US-A- 3 787 349
- US-A1- 2014 272 331
- US-A1- 2016 024 338

## Description

### Field of invention

The invention relates to a method of applying a thermoplastic marking to a road surface.

### Technical Background

It is known to produce pre-manufactured thermoplastic markings having the shape of the total intended marking or having the shape of a part of the intended marking. Such pre-manufactured thermoplastic markings may e.g. be adapted to be placed on a road surface or the like and then be subjected to heat, e.g. by the use of a blow torch, until it reaches an almost liquefied state sufficient for it to adhere to the road surface. Pre-manufactured thermoplastic markings are e.g. known from GB-A-2 030 586, SE-B-399 575, SE-B-341 873, and US-4 708 518.

It is known to provide pre-manufactured thermoplastic markings with so-called temperature indicators, e.g. by providing colour changing indicators or by scoring or punching patterns. Such a pre-manufactured thermoplastic marking is e.g. known from EP 0 882 159 B1, in which it is disclosed to provide deformations in the form of cuts in the shape of scores or punched patterns.

However, cutting or punching a pre-manufactured thermoplastic marking is typically associated with excessive wear of the cutting or punching tool; especially considering that the markings typically include abrasive fillers designed to provide friction to the marking. Moreover, cutting, punching or other kinds of deformation of the pre-manufactured thermoplastic markings also introduces the risk of cracks forming and propagating through the material. Even though cracks often ultimately will disappear when the marking is heated during application to the road surface, such cracks may make transportation more difficult and they may especially make it more difficult to handle the marking on site where the marking is to be positioned and applied to the road surface. If the pre-manufactured marking has cracked during transport or handling on site, it is often required that someone pushes the pieces towards each other during the heating step. This includes a work hazard and also introduces the need for one additional road worker.

A process for production of embossed films based on plasticized polyvinyl acetal and use of the film for glass laminates is known from WO 2016/030284. A thermoplastic interlayer film for glass laminate is also known from document WO 95/19885. Document US 2016/0024338 relates to a composition for use as road marking substance. A preformed or hot applied thermoplastic marking composition is disclosed in US 2014/0272331. US-3,787,349 relates to cold-setting road marking material. Document JP H10 88531 A discloses road marking material in which a plurality of groove-like notches are formed in the upper layer in the width direction, whereby a large number of end side surfaces are formed in the width direction of the upper layer, thereby achieving the light-storing road marking material. Document WO 99/04096 A1 discloses pavement marking tapes having protrusions which are said to provide locally non-horizontal surfaces to support optical elements.

### Summary of invention

It is an object of the invention to address the above mentioned problems.

This object has been achieved by a method of applying a thermoplastic marking in accordance with independent claim 1.

With the above method, it is possible to produce a thermoplastic material provided with indents instead of cutting scores or the like. The indents may during application of the marking to the road surface be used as an indicator that thermoplastic marking has been heated to such an extent that it has become sufficiently liquefied to adhere to the road surface. When the indents disappear by the thermoplastic material composition flowing into a smooth upper surface, this may be considered as an indicator concerning that sufficient heating for correct adherence to the road surface has been achieved.

To be able to provide consistent information to the road worker applying the marking to the road surface, the indents need to be produced in accordance with a method making it possible to provide this consistency in the appearance and behaviour of the indents. The method disclosed above makes it possible to provide such consistency.

By
ii. extruding the thermoplastic material composition from an extruder onto a conveyor, the thermoplastic material composition having an exit temperature of between 100-190 °C when leaving the extruder,
iii. controlling a surface temperature of the surface of the thermoplastic material composition to a temperature being 0-180 °C lower than the exit temperature and being between 20 °C lower than the melting temperature of the thermoplastic material and 10 °C, and
iv. introducing by force a plurality of stamping tools into the extruded and thus tempered thermoplastic material composition to a predetermined depth from a first surface of the extruded thermoplastic material composition,
the indents will be formed in the thermoplastic material composition under circumstances where the thermoplastic material composition will at its surface have shape stability sufficient to retain the shape of the indents given by the stamping tools while surface and especially the core of the thermoplastic material composition will be sufficiently viscous or at least sufficiently plastic to allow for the deformation to occur without formation of cracks. Moreover, the thermoplastic material composition will under these circumstances be easy to deform which in turn will allow for the use of a simple apparatus supporting the stamping tools and still accomplishing well defined indents thereby providing the desired consistency. The controlling of the surface temperature may include heating or cooling. The controlling of the surface temperature will in most practical cases be a form of cooling; such as a passive cooling where the heated and extruded thermoplastic material simply dissipates heat to its cooler surroundings or an active cooling of some kind.

A method with heating, extrusion and cooling will result in a temperature gradient with a thermoplastic marking having comparably a warmer core and a cooler surface facilitating the consistent formation of the indents.

The cooling may be performed by cooling in air, such as by introducing the extruded thermoplastic material composition to ambient air. This may also include actively blowing air towards or past the extruded thermoplastic material composition. The air may have ambient temperature or may be actively cooled to a temperature lower than the prevailing ambient temperature. The cooling may alternatively or as a complement be performed with the use of water or any other cooling agent, preferably a liquid cooling agent, compatible with the thermoplastic material. The water may be sprayed onto the extruded thermoplastic material composition. The water may have ambient temperature, which is an easy and often cost-effective way of providing the cooling. The water may have a temperature higher than ambient temperature and lower than the temperature of the extruded thermoplastic material composition, which is a way of providing a slow and controlled cooling. The water may be actively cooled to a temperature lower than the prevailing ambient temperature, which is a way of providing a rapid cooling. The above discussion concerning the temperature of the water is also applicable for other kinds of liquid or gaseous cooling agents. This also makes it possible to provide the indents by introducing the stamping tools and keeping them introduced in the thermoplastic material composition only for a short time period, even as short as about 0,01 seconds. It may be noted that keeping the stamping tools introduced in the extruded thermoplastic material composition for a longer time makes it easier to secure that the material will cool sufficiently to reach sufficient shape stability to provide well-defined indents. However, a long time will require a long cycle time or a complex apparatus moving the stamping tools with the extruded thermoplastic material composition on the conveyor. Preferably the stamping tools are kept introduced into the extruded thermoplastic material composition for a time period being between 0,01 and 10 seconds. The stamping tools may e.g. be provided on a rotating shaft or drum. Alternatively, the stamping tools may e.g. be provided separately or on frame moving up and down and possibly also back and forth.

Preferred embodiments appear in the dependent claims and in the description.

The thermoplastic material composition may be extruded onto the conveyor with a second surface, opposite the first surface, of the extruded thermoplastic material composition facing the conveyor,
wherein the second surface of the thermoplastic material may be supported, and preferably conveyed, on the conveyor while the stamping tools are introduced and kept introduced into the thermoplastic material composition.

This allows for a secure handling of the extruded thermoplastic material composition and, if the material also is conveyed, it furthermore allows for a continuous process. In the latter case the stamping tools may e.g. be provided on a rotating shaft or drum. The conveyor may be basically of any kind capable of conveying the extruded thermoplastic material composition from the extruder. It may be a conveyor belt. It may be a plurality of active and/or passive rollers. It may be a chute or similarly designed surface upon which the extruded thermoplastic material composition may slide, optionally facilitated by an air-flow from below. The conveyor may also be a combination of the above and other kinds of conveyors. In short it may be said that the conveyor preferably is capable of providing adequate and sufficiently well-defined support to the second surface of the extruded thermoplastic material composition such that the interaction between the stamping tools and the first surface of the extruded thermoplastic material composition will be well-defined which in turn will result in well-defined indents.

The step keeping the stamping tools introduced into the extruded thermoplastic material composition may include cooling the thermoplastic material composition by applying water to the thermoplastic material composition about the areas where the stamping tools are kept introduced into the thermoplastic material composition while the stamping tools are kept introduced into the thermoplastic material composition. This will make it possible to quickly cool the extruded thermoplastic material composition and thereby provide sufficient shape stability to the indents even though the extruded thermoplastic material composition before introduction of the stamping tools has a temperature higher than what would be suitable for the provision of shape stable indents. This also makes it possible to only keep the stamping tools introduced in the extruded thermoplastic material composition for a short time period. It may also be used to provide a significant cooling of the extruded thermoplastic material composition such that not only will the indents reach sufficient shape stability but the extruded thermoplastic material composition as such will be imparted a significant part of the overall cooling in this step.

The stamping tool may be provided with a tack-free surface. This may be used as a complement to the active cooling of the thermoplastic material composition while the stamping tools are kept introduced or as an alternative in which there is no active cooling while the stamping tools are kept introduced into the thermoplastic material composition. This tack-free surface may e.g. be a Teflon surface.

The thermoplastic material is preferably chosen from the group consisting of thermoplastic resins and thermoplastic polymers. Such materials are suitable for mixing with filler and pigments to provide a wear resistant road marking. The resin may e.g. be petrochemical based and/or colophony based. The polymers may e.g. be EVA or SIS. Preferably the thermoplastic material constitutes between 10-90% by weight of the thermoplastic material composition. More preferably the thermoplastic material constitutes between 10-30% of the thermoplastic material composition.

The pigment is preferably chosen from the group consisting of TiO2, organic pigments and inorganic pigments. The organic pigment may e.g. be PY13. The inorganic pigments may e.g. be PB29.

The filler may comprise, preferably mainly comprises, inorganic substances. The filler may e.g. be chosen from the group comprising, and may preferably mainly comprise, Dolomite, CaCO3, sand and/or chalk. These fillers are considered cost-effective and suitable to use when providing a wear resistant road marking.

The thermoplastic material composition may be extruded to a material thickness of between 1,0 and 8mm, and wherein the stamping tools may be introduced from the first surface to a depth within 10-100%, preferably within 25-75% of the material thickness. These dimensions and ratios are considered suitable when it comes to providing a wear resistant road marking having well-defined indents which will consistently function as temperature indicators.

### Brief description of the drawings

The invention will by way of example be described in more detail with reference to the appended schematic drawings, which shows a presently preferred embodiment of the invention.
Figure 1 is a block-diagram schematically disclosing the method of producing the marking.
Figure 2 is a schematic drawing disclosing a side view of an apparatus by which the method may be accomplished.
Figure 3 is a top plan view of selected parts of the apparatus of Figure 2.
Figure 4a is a side view of an extruded thermoplastic material composition provided with an indent.
Figure 4b is a top plan view corresponding to Figure 4a.

### Detailed description of preferred embodiments

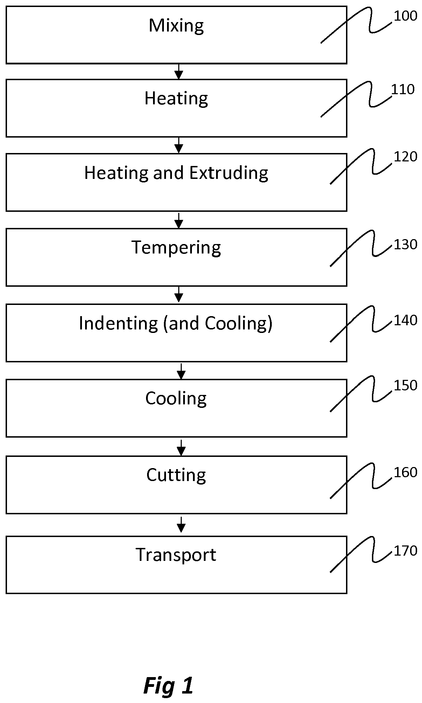

As is briefly indicated in Figure 1, the method in short comprises a mixing step 100 in which the different constituents of the thermoplastic marking are brought together. The constituents include a) thermoplastic material, b) filler material, and c) pigment. Other constituents, such as glass beads, friction material or the like may also be mixed into the material composition at this point.

After or during mixing 100 there is typically a heating step 110. After the constituents have been mixed 100 and optionally preheated 110 they are introduced into an extruder 20. In the extruder 20, the thermoplastic material composition is typically heated and extruded 120. The extruder may be a so-called screw extruder forcefully extruding the material out of the extruder. The extruder may also heat the thermoplastic material to such an extent that the material may basically be poured out of the extruder more or less using gravity as the extruding force. The material may e.g. be smeared out on the conveyor using a blade.

The thermoplastic material composition 1 is extruded from the extruder 20 onto a conveyor 30. The thermoplastic material composition has an exit temperature of between 100-190 °C when leaving the extruder.

Next, in step 130, the surface 1a of the thermoplastic material composition 1 is tempered, typically cooled, to a temperature being 0-180 °C lower than the exit temperature and being between 20 °C below the melting temperature of the thermoplastic material and 10 °C.

In step 140 a plurality of stamping tools is by force introduced into the extruded and thus cooled thermoplastic material composition to a predetermined depth from a first surface 1a of the extruded thermoplastic material composition 1. This step 104 may be said to be a step of indenting. The step 140 of indenting also includes keeping the stamping tools introduced into the extruded thermoplastic material composition for a time period being at least 0,1 seconds.

Optionally the step 140 of indenting also includes cooling the thermoplastic material composition by applying water, or any other suitable cooling agent, to the thermoplastic material composition about the areas where the stamping tools are kept introduced into the thermoplastic material composition while the stamping tools are kept introduced into the thermoplastic material composition.

Moreover, the step 140 of indenting may optionally, separately or in combination with the water cooling above, include keeping the stamping tools introduced into the extruded thermoplastic material composition for a time period sufficient for the thermoplastic material composition to cool 0-180 °C from the temperature the thermoplastic material composition had at the time the stamping tools were introduced into the thermoplastic material composition.

After the thermoplastic material composition has been provided with the indents, the material is cooled 150, cut 160 to the desired shape and then transported 170 to a storage facility or to the site of application.

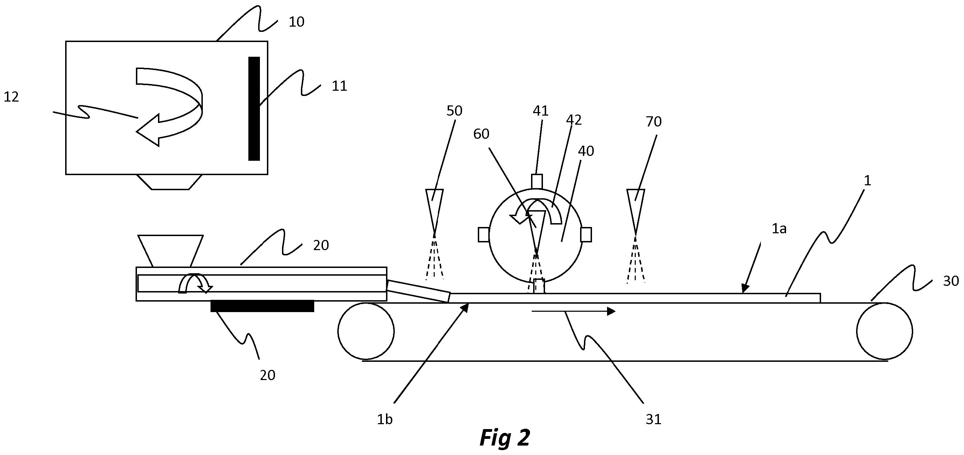

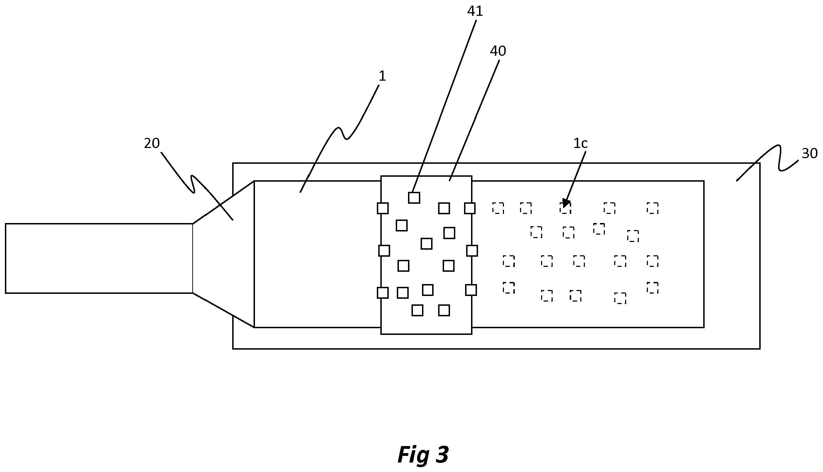

In figure 2 and 3 there is disclosed an apparatus by which the above method may be realised.

The constituents of the thermoplastic marking are introduced into a mixing vessel 10. The mixing vessel is provided with some kind of mixing mechanism 12 effectively mixing the constituents with each other. The mixing vessel 10 is also provided with heating element(s) 11 by which the thermoplastic material composition inside the mixing vessel 10 may be heated.

When the thermoplastic material composition has been sufficiently mixed and optionally sufficiently heated, the composition is transferred to an extruder 20. The extruder 20 may e.g. be a so-called screw extruder or an extruder where the thermoplastic material composition is allowed to flow out onto the conveyor 30. The extruder 20 is typically also provided with heating element(s) 21.

As is shown in figure 2, the thermoplastic material composition may be extruded onto the conveyor 30 with a second surface 1b, opposite the first surface 1a, of the extruded thermoplastic material composition 1 facing the conveyor 30. When leaving the extruder 20, the thermoplastic material composition has an exit temperature Tₑₓᵢₜ of between 100-190 °C. In the preferred embodiment the conveyor 30 is a so-called belt conveyor 30. It is also conceivable to use a conveyor formed of a plurality of rollers extending across the conveying direction 31. Other examples of conveyors 30 are also conceivable.

As shown in figure 2, the extruded thermoplastic material composition 1 is then cooled and the surface of the thermoplastic material composition reaches a temperature Tₑₛ(=T enter stamp) being 0-180 °C lower than the exit temperature Tₑₓᵢₜ and being between 20 °C below the melting temperature of the thermoplastic material and 10 °C. This cooling is e.g. performed by spraying water onto the upper surface 1a of the extruded thermoplastic material composition 1 with the aid of water spray nozzles 50.

The extruded thermoplastic material composition 1 is conveyed by the conveyor 30 along the direction indicated by arrow 31. Once the extruded thermoplastic material composition 1 has cooled as indicated in the paragraph above to the temperature Tₑₛ, a plurality of stamping tools 41 are introduced by force into the extruded and thus cooled thermoplastic material composition 1 to a predetermined depth d from a first surface 1a of the extruded thermoplastic material composition 1. The stamping tools 41 may e.g. be protrusions 41 on a rotating drum or shaft 40. The drum 40 rotates with the conveyor 30 as indicated by the arrow 42. By having the drum 40 rotating with the conveying direction 31, preferably with the same tangential speed as the upper run of the conveyor 30, the stamping tools will be kept introduced into the extruded thermoplastic material composition for a time, preferably without any relative speed in the conveying direction 31. In the preferred embodiment the stamping tools are kept introduced into the extruded thermoplastic material composition for a time period being at least 0,1 seconds, preferably between 0,1 and 10 seconds, more preferably between 0,5 and 5 seconds. Thereafter the stamping tools 41 are removed from the extruded thermoplastic material composition 1.

As it is apparent from figure 2, the step keeping the stamping tools 41 introduced into the extruded thermoplastic material composition 1 includes cooling the thermoplastic material composition 1 by applying water from water spray nozzles 60 to the thermoplastic material composition 1 about the areas where the stamping tools 41 are kept introduced into the thermoplastic material composition 1 while the stamping tools 41 are kept introduced into the thermoplastic material composition 1. In the shown embodiment, the drum is formed of a mesh or bars e.g. extending along the generatrices of the drum 40, thereby allowing the water spray nozzles 60 to be placed inside the drum 40. Alternatively, the water spray nozzles 60 are placed just in front of or just behind the drum (as seen along the conveying direction 31). In such as case they can spray water onto the extruded thermoplastic material composition 1 just before the extruded thermoplastic material composition 1 enters into the clamping action between the stamping tools 41 and the conveyor 30 whereby the water on the extruded thermoplastic material composition 1 will continue to cool the extruded thermoplastic material composition 1 while the stamping tools 41 are kept introduced into the extruded thermoplastic material composition 1. If water spray nozzles 60 are positioned just after drum 40, it is preferred that they are directed towards the area where the stamping tools 40 are kept introduced into the extruded thermoplastic material composition 1. There may also be provided nozzles spraying water or any other cooling liquid on the backside 1b of the thermoplastic material composition 1 on the conveyor 30. As an alternative to or as a complement to the water spray nozzles, the thermoplastic material composition may be trained through a water bath (or a bath or any other cooling liquid).

The stamping tools 41 are kept introduced into the extruded thermoplastic material composition 1 for a time period sufficient for the thermoplastic material composition 1 to cool 0-180 °C from the temperature Tₑₛ the thermoplastic material composition 1 had at the time the stamping tools 41 were introduced into the thermoplastic material composition 1. Thereafter the stamping tools 41 are removed from the extruded thermoplastic material composition 1.

As shown in figure 2, the second surface 1b of the thermoplastic material is supported, and in the preferred embodiment also conveyed, on the conveyor 30 while the stamping tools 41 are introduced and kept introduced into the thermoplastic material composition 1.

After the stamping tools 41 have been kept introduced into the thermoplastic material composition 1 they will leave a plurality of indents 1c in the thermoplastic material composition 1. This is indicated by the dashed squares 1c on the right hand side of the conveyor 30 in figure 3.

The thermoplastic material may be chosen from the group consisting of thermoplastic resins and thermoplastic polymers. Such materials are suitable for mixing with filler and pigments to provide a wear resistant road marking. The resin may e.g. be petrochemical based and/or colophony based. The polymers may e.g. be EVA or SIS. Preferably the thermoplastic material constitutes between 10-90% by weight of the thermoplastic material composition. More preferably the thermoplastic material constitutes between 10-30% of the thermoplastic material composition.

The pigment may e.g. be chosen from the group consisting of TiO2, organic pigments and inorganic pigments. The organic pigment may e.g. be PY13. The inorganic pigments may e.g. be PB29.

The filler may comprise, preferably mainly comprises, inorganic substances. The filler may e.g. be chosen from the group comprising, and may preferably mainly comprise, Dolomite, CaCO3, sand and/or chalk. These fillers are considered cost-effective and suitable to use when providing a wear resistant road marking.

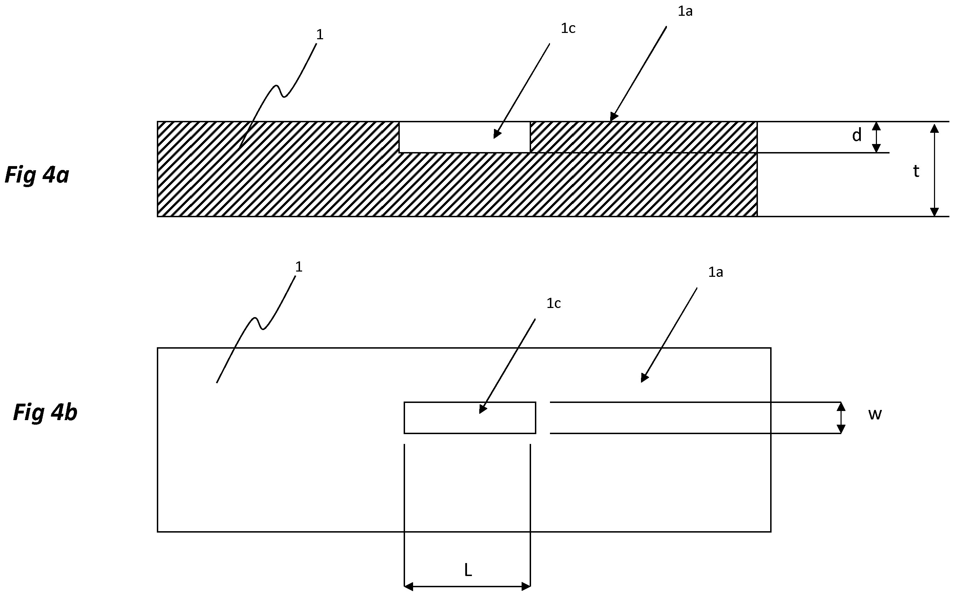

With reference to figures 4a and 4b, the thermoplastic material composition 1 may be extruded to a material thickness t of between 1,5 and 8mm, and wherein the stamping tools 41 may be introduced from the first surface 1a to a depth d within 15-100%, preferably within 25-75% of the material thickness t. These dimensions and ratios are considered suitable when it comes to providing a wear resistant road marking having well-defined indents which will consistently function as temperature indicators.

The stamping tools 41 and the resulting indents 1c may each have a width being between 1-8 mm. The width may be between 0,5 to 2 times the depth. These dimensions and ratios are considered suitable when it comes to providing indents 1c giving a consistent behaviour when the marking is subjected to heating, e.g. by the use of a blow torch, during application of the marking to the road surface. The indents 1c may have different lengths L. It is preferred that the length L is greater than the width w. It is e.g. preferred that the indents 1c have a length of at least 10 mm, preferably a length of about 10-30 mm. The indents may have other shapes, such as having the shape of a triangle, a circle or any other shape.

It is contemplated that there are numerous modifications of the embodiments described herein, which are still within the scope of the invention as defined by the appended claims.

It may e.g. be noted that the material may be extruded onto a first conveyor and then be transferred to another conveyor where the stamping tools interact with the material.

The conveyor may for instance be basically of any kind capable of conveying the extruded thermoplastic material composition from the extruder. It may be a conveyor belt. It may be a plurality of active and/or passive rollers. It may be a chute or similarly designed surface upon which the extruded thermoplastic material composition may slide, optionally facilitated by an air-flow from below. The conveyor may also be a combination of the above and other kinds of conveyors. In short it may be said that the conveyor preferably is capable of providing adequate and sufficiently well-defined support to the second surface of the extruded thermoplastic material composition such that the interaction between the stamping tools and the first surface of the extruded thermoplastic material composition will be well-defined which in turn will result in well-defined indents.

## Claims

1. Method of applying a thermoplastic marking (1) to a road surface, which marking is provided with indents (1c) that during application of the marking to a road surface are used as an indicator that the thermoplastic marking has been heated to such an extent that it has become sufficiently liquefied to adhere to the road surface, the method comprising the steps of:
i. heating and extruding (120) a thermoplastic material composition (1) comprising
a) thermoplastic material constituting between 10-90% by weight of the thermoplastic material composition (1),
b) filler material, and
c) pigment,
ii. extruding (120) the thermoplastic material composition (1) from an extruder (20) onto a conveyor (30), the thermoplastic material composition (1) having an exit temperature (Tₑₓᵢₜ) of between 100-190 °C when leaving the extruder (20),
iii. controlling (130) a surface temperature of a first surface (1a) of the thermoplastic material composition (1) to a temperature (Tₑₛ) being 0-180 °C lower than the exit temperature (Tₑₓᵢₜ) and being between 20 °C lower than the melting temperature (Tₘ) of the thermoplastic material and 10 °C,
iv. introducing (140) by force a plurality of stamping tools (41) into the extruded and thus tempered thermoplastic material composition (1) to a predetermined depth (d) from said first surface (1a) of the extruded thermoplastic material composition (1) to form indents (1c),
wherein the thermoplastic material composition (1) is extruded (120) to a material thickness (t) of between 1,5 and 8 mm, and
wherein the stamping tools (41) are introduced from the first surface (1a) to a depth (d) within 15-100% of the material thickness (t),
v. cooling (150) and cutting (160) the stamped material to desired shapes for application, and
vi. applying the indented thermoplastic marking material to a road surface, wherein an indication of sufficient heating of the thermoplastic marking material for it to become liquefied to adhere to the road surface provided when the indents disappear due to the flow of the heated thermoplastic material to form a smooth upper surface.

2. Method according to claim 1, wherein the thermoplastic material composition (1) is extruded (120) onto the conveyor (30) with a second surface (1b), opposite the first surface (1a), of the extruded thermoplastic material composition (1) facing the conveyor (30),
wherein the second surface (1b) of the thermoplastic material (1) is supported, and preferably conveyed, on the conveyor (30) while the stamping tools (41) are introduced and kept (140) introduced into the thermoplastic material composition (1).

3. Method according to claim 1 or 2, wherein the step (140) keeping the stamping tools (41) introduced into the extruded thermoplastic material composition (1) includes cooling (140) the thermoplastic material composition (1) by applying a cooling agent to the thermoplastic material composition (1) about the areas where the stamping tools (41) are kept introduced into the thermoplastic material composition (1) while the stamping tools (41) are kept introduced into the thermoplastic material composition (1).

4. Method according to any one of claims 1-3, wherein the stamping tool is provided with a tack-free surface.

5. Method according to any one of claims 1-4, wherein the step (140) keeping the stamping tools (41) introduced into the extruded thermoplastic material composition (1) includes keeping the stamping tools (41) introduced into the extruded thermoplastic material composition (1) for a time period sufficient for the thermoplastic material composition (1) to cool 20-100 °C from the temperature (Tₑₛ) the thermoplastic material composition (1) had at the time the stamping tools (41) were introduced into the thermoplastic material composition (1).

6. Method according to any one of claims 1-5, wherein the thermoplastic material is chosen from the group consisting of thermoplastic resins and thermoplastic polymers.

7. Method according to any one of claims 1-6, wherein the pigment is chosen from the group consisting of TiO2, organic pigments and inorganic pigments.

8. Method according to any one of claims 1-7, wherein the filler material comprises, preferably mainly comprises inorganic substances.

9. Method according to any one of claims 1-8, wherein the filler material is chosen from the group comprising, preferably mainly comprises, Dolomite, CaCO3, sand and chalk.

10. Method according to anyone of claims 1-9,
wherein stamping tools (41) are introduced from the first surface (1a) to a depth (d) within 25-75% of the material thickness (t).

## Patentansprüche

1. Verfahren zum Aufbringen einer thermoplastischen Markierung (1) auf eine Straßenoberfläche, wobei die Markierung mit Einrückungen versehen ist, die während des Aufbringens der Markierung auf eine Straßenoberfläche als Indikator dafür verwendet werden, dass die thermoplastische Markierung in einem solchen Ausmaß erhitzt wurde, dass sie zum Anhaften auf der Straßenoberfläche ausreichend flüssig ist, wobei das Verfahren die folgenden Schritte umfasst:
i. Erhitzen und Extrudieren (120) einer thermoplastischen Materialzusammensetzung (1), umfassend:
a) thermoplastisches Material, das 10-90 Gew.-% der thermoplastischen Materialzusammensetzung (1) ausmacht,
b) Füllmaterial und
c) Pigment,
ii. Extrudieren (120) der thermoplastischen Materialzusammensetzung (1) aus einem Extruder (20) auf ein Förderband (30), wobei die thermoplastische Materialzusammensetzung (1) beim Verlassen des Extruders (20) eine Ausgangstemperatur (Tₑₓᵢₜ) von 100-190°C aufweist,
iii. Einstellen (130) einer Oberflächentemperatur einer ersten Oberfläche (1a) der thermoplastischen Materialzusammensetzung (1) auf eine Temperatur (Tₑₛ), die 0-180°C niedriger ist als die Ausgangstemperatur (Tₑₓᵢₜ) und zwischen 20°C niedriger als die Schmelztemperatur (Tₘ) des thermoplastischen Materials und 10°C ist,
iv. Einbringen (140), mittels Kraftanwendung, einer Mehrzahl von Stampfwerkzeugen (41) in die extrudierte und somit temperierte thermoplastische Materialzusammensetzung (1) auf eine vorbestimmte Tiefe (d) von der ersten Oberfläche (1a) der extrudierten thermoplastischen Materialzusammensetzung (1) unter Bildung von Einrückungen (1c),
wobei die thermoplastische Materialzusammensetzung (1) auf eine Materialdicke (t) von zwischen 1,5 und 8 mm extrudiert (120) wird und
wobei die Stampfwerkzeuge (41) von der ersten Oberfläche (1a) auf eine Tiefe (d) innerhalb 15-100% der Materialdicke (t) eingeführt werden,
v. Abkühlen (150) und Schneiden (160) des gestampften Materials auf für die Anwendung gewünschte Formen und
vi. Aufbringen des mit Einrückungen versehenen thermoplastischen Markierungsmaterials auf eine Straßenoberfläche,
wobei ein ausreichendes Erhitzen der thermoplastischen Markierung für deren Verflüssigung zum Anhaften auf der Straßenoberfläche dadurch angezeigt wird, dass die Einrückungen (1c) verschwinden.

2. Verfahren nach Anspruch 1, wobei die thermoplastische Materialzusammensetzung (1) auf das Förderband (30) mit einer zweiten Oberfläche (1b) extrudiert (120) wird, gegenüber der ersten Oberfläche (1a) der dem Förderband (30) gegenüberliegenden extrudierten thermoplastischen Materialzusammensetzung (1),
wobei die zweite Oberfläche (1b) des thermoplastischen Materials (1) auf dem Förderband (30) gestützt und vorzugsweise befördert wird, während die Stampfwerkzeuge (41) eingeführt werden und in der thermoplastischen Materialzusammensetzung (1) eingeführt bleiben (140).

3. Verfahren nach Anspruch 1 oder 2, wobei der Schritt (140) des Verbleibens der in die extrudierte thermoplastische Materialzusammensetzung (1) eingeführten Stampfwerkzeuge (41) das Abkühlen (140) der thermoplastischen Materialzusammensetzung (1) durch Anwendung eines Kühlmittels auf die thermoplastische Materialzusammensetzung (1) in den Regionen, in denen die Stampfwerkzeuge (41) in der thermoplastischen Materialzusammensetzung (1) eingeführt verbleiben, umfasst, während die Stampfwerkzeuge (41) in der thermoplastischen Materialzusammensetzung (1) eingeführt verbleiben.

4. Verfahren nach einem der Ansprüche 1-3, wobei das Stampfwerkzeug mit einer Antihaftoberfläche versehen ist.

5. Verfahren nach einem der Ansprüche 1-4, wobei der Schritt (140) des Verbleibens der in die extrudierte thermoplastische Materialzusammensetzung (1) eingeführten Stampfwerkzeuge (41) das Verbleiben der in die extrudierte thermoplastische Materialzusammensetzung (1) eingeführten Stampfwerkzeuge (41) über einen Zeitraum einschließt, der ausreicht, um die thermoplastische Materialzusammensetzung (1) um 20-100°C von der Temperatur (Tₑₛ) der thermoplastischen Materialzusammensetzung (1) zum Zeitpunkt des Einführens der Stampfwerkzeuge (41) in die thermoplastische Materialzusammensetzung (1) abzukühlen.

6. Verfahren nach einem der Ansprüche 1-5, wobei das thermoplastische Material aus der aus thermoplastischen Harzen und thermoplastischen Polymeren bestehenden Gruppe ausgewählt ist.

7. Verfahren nach einem der Ansprüche 1-6, wobei das Pigment aus der aus TiO2, organischen Pigmenten und anorganischen Pigmenten bestehenden Gruppe ausgewählt ist.

8. Verfahren nach einem der Ansprüche 1-7, wobei das Füllmaterial anorganische Substanzen umfasst und vorzugsweise hauptsächlich anorganische Substanzen umfasst.

9. Verfahren nach einem der Ansprüche 1-8, wobei das Füllmaterial aus der Dolomit, CaCO3, Sand und Kreide umfassenden, vorzugsweise hauptsächlich Dolomit, CaCO3, Sand und Kreide umfassenden Gruppe ausgewählt ist.

10. Verfahren nach einem der Ansprüche 1-9,
wobei Stampfwerkzeuge (41) von der ersten Oberfläche (1a) auf eine Tiefe (d) innerhalb 25-75% der Materialdicke (t) eingeführt werden.

## Revendications

1. Procédé d'application d'un marquage thermoplastique (1) sur une surface de route, lequel marquage est pourvu d'indentations qui pendant l'application du marquage sur une surface de route sont utilisées comme indicateur que le marquage thermoplastique a été chauffé à un degré tel qu'il est devenu suffisamment liquéfié pour adhérer à la surface de route, le procédé comprenant les étapes consistant à :
i. chauffer et extruder (120) une composition de matière thermoplastique (1) comprenant
a) une matière thermoplastique constituant entre 10 et 90 % en poids de la composition de matière thermoplastique (1),
b) une matière de charge et
c) un pigment,
ii. extruder (120) la composition de matière thermoplastique (1) à partir d'une extrudeuse (20) sur un transporteur (30), la composition de matière thermoplastique (1) ayant une température de sortie (Tₛₒᵣₜᵢₑ) comprise entre 100 et 190 °C lorsqu'elle sort de l'extrudeuse (20),
iii. réguler (130) une température de surface d'une première surface (1a) de la composition de matière thermoplastique (1) à une température (Tₑₛ) qui est 0-180 °C plus basse que la température de sortie (Tₛₒᵣₜᵢₑ) et qui est entre 20 °C au-dessous de la température de fusion (Tₘ) de la matière thermoplastique et 10 °C,
iv. introduire (140) de force une pluralité d'outils d'estampage (41) dans la composition de matière thermoplastique (1) extrudée et ainsi durcie à une profondeur (d) prédéfinie par rapport à une première surface (1a) de la composition de matière thermoplastique (1) extrudée pour former des indentations (1c),
dans lequel la composition de matière thermoplastique (1) est extrudée (120) à une épaisseur de matière (t) comprise entre 1,5 et 8 mm et
dans lequel les outils d'estampage (41) sont introduits à partir de la première surface (1a) à une profondeur (d) dans la plage de 15-100 % de l'épaisseur de matière (t),
v. refroidir (150) et découper (160) la matière estampée à des formes souhaitées pour l'application, et
vi. appliquer la matière de marquage thermoplastique pourvue d'indentations sur une surface de route, une indication d'un chauffage suffisant du marquage thermoplastique pour qu'il devienne suffisamment liquéfié pour adhérer à la surface de route étant fourni lorsque les indentations (1c) disparaissent.

2. Procédé selon la revendication 1, dans lequel la composition de matière thermoplastique (1) est extrudée (120) sur le transporteur (30) avec une seconde surface (1b), à l'opposé de la première surface (la), de la composition de matière thermoplastique (1) extrudée en regard du transporteur (30),
dans lequel la seconde surface (1b) de la matière thermoplastique (1) est supportée, et de préférence transportée, sur le transporteur (30) alors que les outils d'estampage (41) sont introduits et maintenus (140) introduits dans la composition de matière thermoplastique (1).

3. Procédé selon la revendication 1 ou 2, dans lequel l'étape (140) maintenant les outils d'estampage (41) introduits dans la composition de matière thermoplastique (1) extrudée comprend le refroidissement (140) de la composition de matière thermoplastique (1) par application d'un agent de refroidissement sur la composition de matière thermoplastique (1) autour des zones où les outils d'estampage (41) sont maintenus introduits dans la composition de matière thermoplastique (1) alors que les outils d'estampage (41) sont maintenus introduits dans la composition de matière thermoplastique (1).

4. Procédé selon l'une quelconque des revendications 1-3, dans lequel l'outil d'estampage est pourvu d'une surface non collante.

5. Procédé selon l'une quelconque des revendications 1-4, dans lequel l'étape (140) maintenant les outils d'estampage (41) introduits dans la composition de matière thermoplastique (1) extrudée comprend le maintien des outils d'estampage (41) introduits dans la composition de matière thermoplastique (1) extrudée pendant une durée suffisante pour que la composition de matière thermoplastique (1) refroidisse de 20-100 °C par rapport à la température (Tₑₛ) que la composition de matière thermoplastique (1) avait au moment où les outils d'estampage (41) ont été introduits dans la composition de matière thermoplastique (1).

6. Procédé selon l'une quelconque des revendications 1-5, dans lequel la matière thermoplastique est choisie dans le groupe constitué par les résines thermoplastiques et les polymères thermoplastiques.

7. Procédé selon l'une quelconque des revendications 1-6, dans lequel le pigment est choisi dans le groupe constitué par TiO₂, les pigments organiques et les pigments inorganiques.

8. Procédé selon l'une quelconque des revendications 1-7, dans lequel la matière de charge comprend, de préférence comprend principalement des substances inorganiques.

9. Procédé selon l'une quelconque des revendications 1-8, dans lequel la matière de charge est choisie dans le groupe comprenant la dolomite, CaCO₃, le sable et la craie, de préférence comprend principalement ceux-ci.

10. Procédé selon l'une quelconque des revendications 1-9,
dans lequel les outils d'estampage (41) sont introduits à partir de la première surface (1a) à une profondeur (d) dans la plage de 25-75 % de l'épaisseur de matière (t).
